# EUROPÄISCHE PATENTANMELDUNG

(11) **EP 0 875 982 A1**
(43) Veröffentlichungstag der Anmeldung: **04.11.1998**
(21) Anmeldenummer: 97810266.3
(22) Anmeldetag: 29.04.1997
(51) Int. Cl.: H02K 41/03, B65G 47/91

(54) **Elektromagnetischer Linearantrieb**

(71) Anmelder: Sulzer Electronics AG, 8409 Winterthur (CH)
(72) Erfinder: Rohner, Ronald, Dr., 8965 Berikon (CH); Huber, Peter, 3292 Busswil (CH); Hitz, Marco, 3186 Düdingen (CH)
(74) Vertreter: Heinen, Detlef

(57) **Zusammenfassung**

Der erfindungsgemässe elektromagnetische Linearantrieb (1) umfasst einen hohlzylindrischen Stator (2) und einen im Innenraum des Stators in Richtung der Statorlängsachse verschiebbaren stabförmigen Läufer (3). Ferner sind Mittel (4,33;4,36,41;4,42,37;38,43) zur Rotation des Läufers (3) um seine Längsachse vorgesehen.

## Beschreibung

Die Erfindung betrifft einen Linearantrieb gemäss dem Oberbegriff des unabhängigen Patentanspruchs.

Linearantriebe sind gängige Antriebsmittel überall dort, wo es erforderlich ist, eine Linearbewegung zu erzeugen. Ihre Anwendungsgebiete sind sehr unterschiedlich. Elektromagnetische Linearantriebe umfassen typischerweise einen hohlzylindrischen Stator und einen im Innenraum des Stators in Richtung der Statorlängsachse (Zylinderachse) verschiebbaren stabförmigen Läufer. Um dies zu erreichen, kann der Stator beispielsweise entlang der Statorlängsachse mehrere aufeinander folgende Wicklungen aufweisen, die bei entsprechender Ansteuerung bewirken, dass der Läufer mittels elektromagnetischer Kräfte aus seiner Ruheposition in eine gewünschte Position bewegt wird. Solche Linearantriebe sind bekannt.

Nachteilig an derartigen Linearantrieben ist jedoch, dass bei vielen Anwendungen nicht nur eine reine Linearbewegung erforderlich ist. Beispielsweise beim Greifen und anschliessenden Umsetzen von Bauteilen ist es sehr oft der Fall, dass die Bauteile im nachfolgenden Arbeitsschritt in einer bestimmten Orientierung platziert werden müssen. Um dies zu erreichen, ist bisher in der Regel entweder eine vergleichsweise aufwendige mechanische Konstruktion oder gar einen separaten Arbeitsschritt notwendig, in welchem die Bauteile in die gewünschte Orientierung gebracht werden müssen.

Es ist daher eine Aufgabe der Erfindung, einen Linearantrieb vorzuschlagen, der die vorgenannten Nachteile nicht aufweist und der wenig aufwendig ist. Weiterhin soll der Antrieb zuverlässig, kostengünstig, und möglichst universell einsetzbar sein.

Diese Aufgabe wird durch einen Linearantrieb gelöst, wie er durch die Merkmale des unabhängigen Patentanspruchs charakterisiert ist. Durch die Tatsache, dass bei dem erfindungsgemässen Linearantrieb Mittel zur Rotation des Läufers um seine Längsachse vorgesehen sind, kann z.B. ein Bauteil nach dem Greifen bereits beim Umsetzen in die für den nächsten Arbeitsschritt erforderliche Orientierung gebracht werden, wodurch eine vergleichsweise aufwendige mechanische Konstruktion bzw. ein separater Arbeitsschritt, in welchem die gewünschte Orientierung erreicht wird, obsolet wird. Gleichzeitig ist diese Lösung vom technischen Aufwand her einfach, zuverlässig und kostengünstig.

Ein bevorzugtes Ausführungsbeispiel des erfindungsgemässen Linearmotors zeichnet sich dadurch aus, dass die Mittel zur Rotation des Läufers einen Elektromotor umfassen und dass der Läufer einen Bereich aufweist, der als Rotor dieses Elektromotors ausgebildet ist. Diese Lösung ist vom technischen Aufwand her betrachtet einfach und die Übertragung des zur Drehung des Läufers erforderlichen Drehmoments kann berührungslos erfolgen. Ausserdem kann mit Hilfe von Elektromotoren eine sehr genaue Drehung erreicht werden, sodass z.B. ein Bauteil nach dem Drehen präzise die gewünschte Orientierung aufweist.

Bei einem weiteren vorteilhaften Ausführungsbeispiel weist der Stator entlang des Bereichs, der für die lineare Verschiebbarkeit des Läufers ausgebildet ist, in axialer Richtung betrachtet mehrere aufeinander folgende Wicklungen auf. Der Läufer umfasst in diesem Bereich mehrere scheibenförmige (oder auch ringförmige) Elemente, die in axialer Richtung aufeinander folgend angeordnet sind. Dabei sind im Wechsel immer ein axial polarisiertes permanentmagnetisches Element und ein Zwischenelement aufeinander folgend angeordnet. Die permanentmagnetischen Elemente sind so angeordnet, dass zu beiden Seiten eines Zwischenelements gleichnamige magnetische Pole einander gegenüberliegen. Diese Lösung ist konstruktiv einfach und kompakt.

Bei einem weiteren Ausführungsbeispiel weist der Stator entlang des Bereichs, der für die lineare Verschiebbarkeit des Läufers ausgebildet ist, ebenfalls mehrere aufeinander folgende Wicklungen auf. Der Läufer weist in diesem Bereich wieder mehrere ringförmige Elemente auf, die in axialer Richtung aufeinander folgend angeordnet und permanentmagnetisch ausgebildet sind. Allerdings sind die ringförmigen Elemente bei diesem Ausführungsbeispiel in radialer Richtung magnetisiert. In axialer Richtung sind sie derart aufeinander folgend angeordnet, dass bei benachbarten Elementen in axialer Richtung immer ungleichnamige magnetische Pole aufeinander folgen. Auch dieses Ausführungsbeispiel ist konstruktiv einfach und kompakt.

Bei einem weiteren Ausführungsbeispiel des erfindungsgemässen Linearantriebs umfassen die Mittel zur Rotation des Läufers ein am Läufer vorgesehenes Ansatzstück. Dieses Ansatzstück ist so ausgebildet, dass es mit einem entsprechenden Gegenstück, welches mit einem rotierbaren Antrieb verbunden ist, mechanisch in Eingriff bringbar ist, wodurch ebenfalls auf einfache und wenig aufwendige Weise eine Drehung des Läufers um seine Längsachse möglich ist.

Bei einem weiteren Ausführungsbeispiel des erfindungsgemässen Linearantriebs weisen die Mittel zur Rotation des Läufers eine am Läufer ausgebildete im wesentlichen in Längsrichtung verlaufende gekrümmte Rippe auf, welche mit einer geradlinig verlaufenden Nut eines ortsfest angeordneten Gegenstücks in Eingriff bringbar ist. Bei diesem Ausführungsbeispiel ist kein Motor zum Erwirken des Verdrehens erforderlich, da durch die in die Nut des ortsfesten Gegenstücks eingreifende gekrümmte Rippe am Läufer beim linearen Verschieben des Läufers automatisch eine Drehung des Läufers bewirkt wird. Die Drehung des Läufers hängt jedoch bei diesem Ausführungsbeispiel fest von dem Weg ab, um den der Läufer linear verschoben wird. Besteht zwischen diesem Weg und der gewünschten Drehung bei der gewünschten Anwendung aber immer ein vorgegebener Zusammenhang, so zeichnet sich dieses Ausführungsbeispiel dadurch aus, dass kein zusätzlicher Antrieb (Motor) erforderlich ist.

Alternativ kann anstelle einer Rippe auch ein Stift am Läufer vorgesehen sein, der mit einer gekrümmten Nut am Gegenstück in Eingriff bringbar ist, oder es kann auch eine gekrümmte Nut am Läufer vorgesehen sein und am Gegenstück ein ortsfest angeordneter Stift, welcher mit der Nut in Eingriff bringbar ist. Diese Varianten weisen die gleichen Vorteile auf wie die oben bereits genannte Variante mit der gekrümmten Rippe.

Weitere vorteilhafte Ausgestaltungen ergeben sich aus der nachfolgenden Beschreibung der Zeichnungsfiguren. Es zeigen in schematischer Darstellung:
- Fig. 1: eine Prinzipdarstellung eines Ausführungsbeispiels des erfindungsgemässen Linearantriebs mit einem Elektromotor zum Drehen des Läufers,
- Fig. 2: einen Querschnitt durch den Läufer in dem Bereich, in welchem der Läufer als Rotor des Elektromotors ausgebildet ist,
- Fig. 3: einen Längsschnitt durch ein Ausführungsbeispiel des Linearantriebs in dem Bereich, der für die lineare Verschiebbarkeit des Läufers ausgebildet ist,
- Fig. 4: einen Längsschnitt durch ein weiteres Ausführungsbeispiel des Linearantriebs in dem Bereich, der für die lineare Verschiebbarkeit des Läufers ausgebildet ist
- Fig. 5: eine Prinzipdarstellung eines weiteren Ausführungsbeispiels des erfindungsgemässen Linearantriebs mit einem Vierkant am Fortsatz des Läufers und einem entsprechenden Gegenstück am Motor,
- Fig. 6: eine Prinzipdarstellung eines weiteren Ausführungsbeispiels des erfindungsgemässen Linearantriebs mit einem Zahnrad und einem entsprechenden zylindrischen Gegenstück, welches in die Zähne des Zahnrads eingreift
und
- Fig. 7: eine Prinzipdarstellung eines weiteren Ausführungsbeispiels des erfindungsgemässen Linearantriebs mit einer gekrümmten Rippe am Fortsatz des Läufers, welche in eine geradlinige Nut eines ortsfest angeordneten Gegenstücks eingreift.

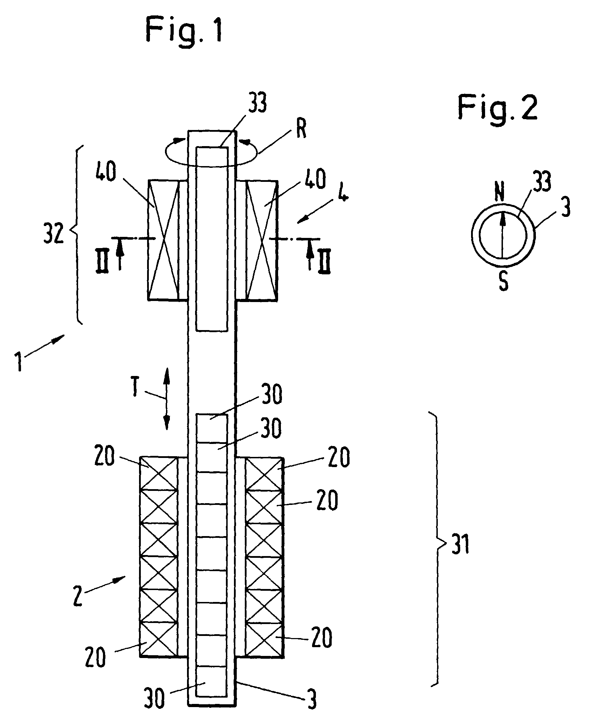

In der in Fig. 1 gezeigten Prinzipdarstellung eines Ausführungsbeispiels des erfindungsgemässen Linearantriebs 1 erkennt man einen hohlzylindrischen Stator 2 mit mehreren in axialer Richtung aufeinander folgend angeordneten Wicklungen 20. Ferner erkennt man einen im Innenraum des Stators 2 verschiebbaren Läufer 3, in welchem mehrere scheibenförmige (bzw. ringförmige) Elemente 30 in einem Bereich 31 in axialer Richtung aufeinander folgend angeordnet sind. Durch eine entsprechende Ansteuerung der Wicklungen 20 (entweder einzeln oder gruppenweise) kann der Läufer 3 in Richtung der Pfeile T (translatorisch) verschoben werden.

Ferner erkennt man in Fig. 1 einen Bereich 32 des Läufers 3, der als Rotor eines Elektromotors 4 ausgebildet ist. Der Elektromotor 4 weist (symbolisch angedeutete) Wicklungen 40 auf, mit deren Hilfe ein Drehfeld erzeugt werden kann. Im Bereich 32 des Läufers 3 ist ein stabförmiger Permanentmagnet 33 vorgesehen, der z.B. in diametraler Richtung magnetisiert sein kann, so wie es in Fig. 2 in vereinfachter Darstellung dargestellt ist. Mit Hilfe des von dem Elektromotor 4 (Fig. 1) erzeugten Drehfelds kann also - z.B. nach dem Prinzip eines Synchronmotors - eine Drehbewegung in Richtung der Pfeile R (rotatorisch) zusätzlich zu der translatorischen Verschiebbarkeit des Läufers 3 erzeugt werden.

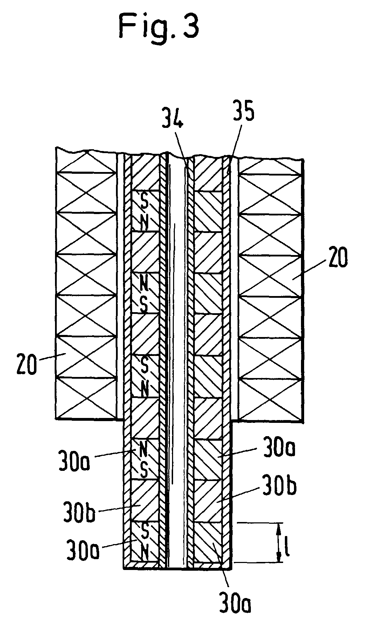

In Fig. 3 erkennt man einen Längsschnitt durch einen Ausschnitt aus dem Bereich 31 eines Ausführungsbeispiels des erfindungsgemässen Linearantriebs, der für die lineare (translatorische) Verschiebung des Läufers 3 ausgebildet ist. In diesem Ausführungsbeispiel umfasst der Läufer 3 ein z.B. metallisches Innenrohr 34 und ein z.B. metallisches Aussenrohr 35, wobei zwischen dem Innerohr 34 und dem Aussenrohr 35 des Läufers 3 mehrere scheibenförmige Elemente 30a und 30b (die hier ringförmig ausgebildet sind, aber auch Vollscheiben sein können) in axialer Richtung aufeinander folgend angeordnet sind. Während die Elemente 30a permanentmagnetische Elemente sind und in axialer Richtung magnetisiert sind, dienen die Zwischenelemente 30b als Abstandshalter, in denen der magnetische Fluss geführt wird. Zu beiden Seiten eines Zwischenelements 30b liegen in diesem Ausführungsbeispiel gleichnamige magnetische Pole einander gegenüber. Die Länge l eines permanentmagnetischen Elements 30a entspricht bei diesem Ausführungsbeispiel der Länge eines Zwischenelements 30b und stimmt mit der Länge einer Wicklung 20 des Stators überein.

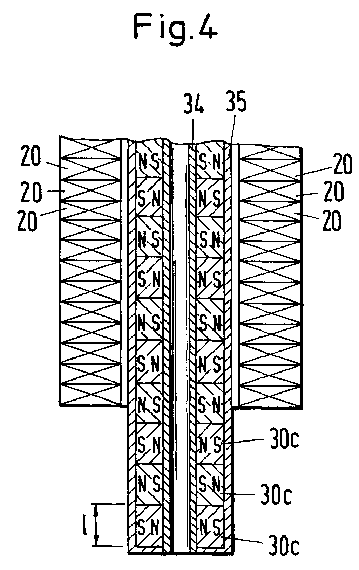

In Fig. 4 erkennt man einen Längsschnitt durch einen Ausschnitt aus dem Bereich 31 eines weiteren Ausführungsbeispiels des erfindungsgemässen Linearantriebs. Der Läufer 3 weist ein Innenrohr 34 und ein Aussenrohr 35 auf, zwischen denen ringförmige permanentmagnetische Elemente 30c in axialer Richtung aufeinander folgend angeordnet sind. Die ringförmigen permanentmagnetischen Elemente 30c sind bei diesem Ausführungsbeispiel in radialer Richtung magnetisiert. In axialer Richtung sind die Elemente 30c derart aufeinander folgend angeordnet, dass bei benachbarten Elementen 30c in axialer Richtung betrachtet immer ungleichnamige magnetische Pole aufeinander folgen. Ausserdem existieren bei diesem Ausführungsbeispiel keine Zwischenelemente wie bei dem anhand von Fig. 3 erläuterten Ausführungsbeispiel. Die Länge l eines scheibenförmigen permanentmagnetischen Elements 30c entspricht bei diesem Ausführungsbeispiel der doppelten Länge einer Wicklung 20.

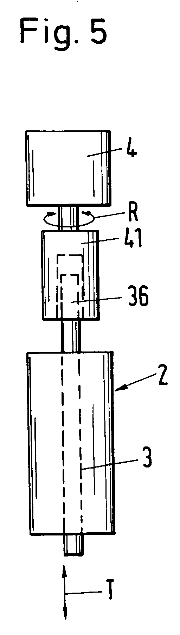

Während bei den anhand von Fig. 1-4 erläuterten Ausführungsbeispielen des erfindungsgemässen Linearantriebs die Übertragung des Drehmoments, welches für die Drehung des Läufers 3 erforderlich ist, berührungslos erfolgt (über elektromagnetische Kräfte), kann dies auch mittels einer mechanischen Übertragung erfolgen. In den Fig. 5-7 sind nun Ausführungsbeispiele gezeigt, bei denen die Übertragung des Drehmoments mechanisch erfolgt.

Fig. 5 zeigt ein Ausführungsbeispiel des erfindungsgemässen Linearantriebs, bei welchem an dem Läufer ein Ansatzstück zum Beispiel in Form eines Vierkants 36 vorgesehen ist, der in eine entsprechende Bohrung in einem Gegenstück in Form einer Buchse 41 eingreift. Es ist klar, dass der Hub des Läufers in Richtung der Pfeile T (also der Hub der Linearbewegung) hier durch die Länge der Bohrung begrenzt ist, damit zu jedem Zeitpunkt die mechanische Übertragung des Drehmoments mittels der Buchse 41 auf den Vierkant 36 gewährleistet ist. Der Motor 4 kann als Elektromotor, aber z.B. auch als pneumatischer oder hydraulischer Antrieb ausgebildet sein.

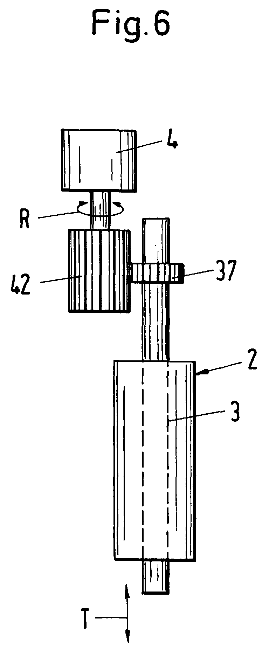

Fig. 6 zeigt ein weiteres Ausführungsbeispiel des erfindungsgemässen Linearantriebs, bei welchem an dem Läufer 3 ein Ansatzstück vorgesehen ist, welches hier als Wellenzahnrad 37 ausgebildet ist. Dieses Wellenzahnrad 37 ist im Eingriff mit einem Gegenstück in Form eines Zylinders 42, welcher auf seiner Aussenwand entsprechende Längsrippen aufweist, die im Eingriff mit den Zähnen des Wellenzahnrads stehen. Der Zylinder ist mittels des Motors 4 rotatorisch antreibbar. Die Übertragung des Drehmoments zur Drehung des Läufers 3 erfolgt hier also ebenfalls mittels einer mechanischen Kopplung (Eingreifen von Zähnen ineinander, kann aber auch z.B. mittels einer Reibkupplung, also über Reibräder ausgeführt sein). Der Motor 4 kann als Elektromotor ausgebildet sein, kann aber auch als hydraulischer oder pneumatischer Antrieb ausgebildet sein.

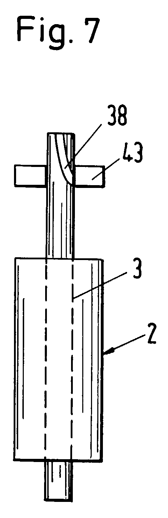

Fig. 7 zeigt schliesslich ein Ausführungsbeispiel des erfindungsgemässen Linearantriebs, bei welchem auf der Aussenwand des Läufers 3 eine gekrümmte Rippe 38 vorgesehen ist, welche in eine entsprechende geradlinig verlaufende Nut in einem ortsfest angeordneten Gegenstück 43 vorgesehen ist. Bei diesem Ausführungsbeispeil wird die (translatorische) Linearbewegung des Läufers 3 automatisch auch noch in eine Drehung des Läufers umgesetzt. Allerdings ist der Winkel, um den der Läufer gedreht wird, durch den Betrag des Weges, um den der Läufer 3 translatorisch verschoben wird, fest vorgegeben, da er von dem Verlauf der gekrümmten Rippe abhängig ist. Bei Anwendungen, bei denen beispielsweise beim Verschieben des Läufers 3 um einen vorgegebenen Weg immer auch gleichzeitig der Läufer um den gleichen Winkel gedreht werden muss, ist dieses Ausführungsbeispiel insofern vorteilhaft, als hier kein zusätzlicher motorischer Antrieb erforderlich ist, um die Drehung des Läufers 3 zu bewirken.

## Patentansprüche

1. Elektromagnetischer Linearantrieb (1) mit einem hohlzylindrischen Stator (2) und mit einem im Innenraum des Stators in Richtung der Statorlängsachse verschiebbaren stabförmigen Läufer (3), dadurch gekennzeichnet, dass Mittel (4,33;4,36,41;4,42,37;38,43) zur Rotation des Läufers (3) um seine Längsachse vorgesehen sind.

2. Linearantrieb nach Anspruch 1, dadurch gekennzeichnet, dass die Mittel zur Rotation des Läufers einen Elektromotor umfassen und dass der Läufer (3) einen Bereich (32) aufweist, der als Rotor dieses Elektromotors ausgebildet ist.

3. Linearantrieb nach einem der vorangehenden Ansprüche, dadurch gekennzeichnet, dass der Stator (2) entlang des Bereichs (31), der für die lineare Verschiebbarkeit des Läufers (3) ausgebildet ist, in axialer Richtung betrachtet mehrere aufeinander folgende Wicklungen (20) aufweist, und dass der Läufer (3) in diesem Bereich mehrere scheibenförmige Elemente (30) umfasst, die in axialer Richtung aufeinander folgend angeordnet sind, wobei im Wechsel immer ein axial polarisiertes permanentmagnetisches Element (30a) und ein Zwischenelement (30b) aufeinander folgen und wobei die permanentmagnetischen Elemente (30a) so angeordnet sind, dass zu beiden Seiten eines Zwischenelements (30b) gleichnamige magnetische Pole einander gegenüberliegen.

4. Linearantrieb nach einem der Ansprüche 1 oder 2, dadurch gekennzeichnet, dass der Stator (2) entlang des Bereichs (31), der für die lineare Verschiebbarkeit des Läufers (3) ausgebildet ist, mehrere aufeinander folgende Wicklungen (20) aufweist, und dass der Läufer (3) in diesem Bereich mehrere ringförmige Elemente (30c) aufweist, die in axialer Richtung aufeinander folgend angeordnet und permanentmagnetisch ausgebildet sind, wobei die Elemente (30c) in radialer Richtung magnetisiert sind und in axialer Richtung derart aufeinander folgend angeordnet sind, dass bei benachbarten Elementen in axialer Richtung ungleichnamige magnetische Pole aufeinander folgen.

5. Linearantrieb nach Anspruch 1, dadurch gekennzeichnet, dass die Mittel zur Rotation des Läufers (3) ein am Läufer vorgesehenes Ansatzstück (36;37) umfassen, welches so ausgebildet ist, dass es mit einem entsprechenden Gegenstück (41;42), welches mit einem rotierbaren Antrieb (4) verbunden ist, mechanisch in Eingriff bringbar ist.

6. Linearantrieb nach Anspruch 1, dadurch gekennzeichnet, dass die Mittel zur Rotation des Läufers (3) eine am Läufer ausgebildete im wesentlichen in Längsrichtung verlaufende gekrümmte Rippe (38) aufweist, welche mit einer geradlinig verlaufenden Nut eines ortsfest angeordneten Gegenstücks (43) in Eingriff bringbar ist.

7. Linearantrieb nach Anspruch 1, dadurch gekennzeichnet, dass die Mittel zur Rotation des Läufers (3) einen am Läufer vorgesehenen Stift umfassen, der in eine gekrümmte Nut eines ortsfest angeordneten Gegenstücks in Eingriff bringbar ist.

8. Linearantrieb nach Anspruch 1, dadurch gekennzeichnet, dass die Mittel zur Rotation des Läufers (3) eine gekrümmte Nut auf dem Läufer und einen ortsfest von einem Gegenstück in Richtung des Läufers (3) abstehenden Stift aufweisen, der mit der Nut in Eingriff bringbar ist.
